# EUROPEAN PATENT APPLICATION

(11) **EP 3 471 110 A1**
(43) Date of publication of application: **17.04.2019**
(21) Application number: 16904756.0
(22) Date of filing: 10.06.2016
(51) Int. Cl.: G21G 1/02, G21G 4/08, G21C 1/02

(54) **METHOD FOR PRODUCING RADIOACTIVE ISOTOPES IN A FAST NEUTRON REACTOR**

(71) Applicant: Joint Stock Company "Science And Innovations" (Science and Innovation JSC"), Moscow 119017 (RU)
(72) Inventor: RISOVANYY, Vladimir Dmitrievich, Moscow 119017 (RU); DUB, Aleksey Vladimirovich, Moscow 119017 (RU); KONDRAT'EV, Nikolay Aleksandrovich, Moscow 119017 (RU); PERSHUKOV, Vyacheslav Aleksandrovich, Moscow 119017 (RU); ASMOLOV, Vladimir Grigor'evich, Moscow 119017 (RU); BAKANOV, Mikhail Vasil'evich, Moscow 115191 (RU); KOZMANOV, Evgeniy Aleksandrovich, g. Zarechniy Sverdlovskaya obl. 624250 (RU); VASIL'EV, Boris Aleksandrovich, Nizhniy Novgorod 603074 (RU); KLINOV, Dmitriy Anatol'evich, Obninsk Kaluzhskaya obl. 249033 (RU); SILIN, Boris Georgievich, Moscow 119017 (RU)
(74) Representative: Friese Goeden Patentanwälte PartGmbB
(86) International application number: PCT/RU2016/000358
(87) International publication number: WO 2017/213538

(57) **Abstract**

The invention is related to nuclear technology and may be used for radiation of different materials (targets) by neutrons for production of radionuclides. The essence of invention is the method of radioactive isotopes production in Fast Neutron Nuclear Reactor which includes the following steps. The targets for radio nuclides production are being placed in the radiation assembly between the plumbs made of neutrons slowing materials, and the radiation assembly is being placed in the side screen of Fast Neutron Nuclear Reactor The assemblies not containing nuclear fuel are placed around the radiation assembly. Fast neutrons are passed through the neutrons slowing material and then the slowed neutrons are passed through the radiated material (targets) in radiation assembly. The meaning of the this invention is the fact that the radio isotopes production is being done simultaneously in radiation assembly and surrounding assemblies with content of steel less than 50% The targets of radiation assembly have the absorption cross-section over 1 barn with neutrons energy less than 0,1 MeV. The targets of assemblies surrounding the radiation assembly have the neutrons absorption cross-section less than 1 barn with neutrons energy over 0.1 MeV.

## Description

The invention is related to nuclear technology and may be used for radiation of different materials (targets) by neutrons for production of radionuclides.

There is a known method of targets radiation by neutrons in thermal-neutron reactors (research reactors, WWER, RBMK, etc.) the sense of which is that the target is made of radiated material and placed inside the special radiation assembly (RA) which is placed in the cells of nuclear reactor core with given thermal spectrum of neutrons. In process of operation of reactor the targets are being radiated by neutrons and accumulate radio nuclides up to activity required.

After extraction of RAs from the nuclear reactor the targets are being dissembled in radiation protected cameras or boxes. The active core with radio nuclides is being extracted. Then the active core is being placed in protective hermetic coat. At the final stage the control operations for product shuffle are being done - tests for hermetic nature, surface pollution by radio nuclides, geometric dimensions, activity measurement.

This method allows to work out the radio nuclides from targets of starting materials well resorbing the thermal neutrons with energy less than 0,68 eV. The disadvantages of the method are: relatively low neutron flow (as a rule less than 5x10¹⁴cm⁻²c⁻¹) small volumes of reactor core for targets placement, relatively low quantity of "excessive" neutrons for production of radio nuclides which is defined by small reactivity reserve. The said disadvantages are defined by physical characteristics of thermal neutron nuclear reactors using substantial quantities of neutron slowing materials, such as heavy or common water, Graphite, Beryllium.

There is a known method of targets radiation by neutrons in fast neutron nuclear reactors with the sense that targets radiation is being conducted in RAs situated in the core or side screen of fast Neutron Nuclear Reactor. The presence of significant flow of fast neutrons (over 1x10¹⁵cm⁻²c⁻¹) allows to shorten the time for radio nuclides production. The Fast Neutron Nuclear Reactor has significantly more place for placement of targets and "excessive" neutrons which are being used in the side screen for production of nuclear fuel - Plutonium,

The weak point of this method is the impossibility to work out the radio nuclides with required activity of the target materials having low thermal activation cross-section for neutrons with energy lower than 1MeV, which is common for all Fast Neutron Nuclear Reactors. The said disadvantage is defined by physical characteristics of Fast Neutron Nuclear Reactors.

There is a method known for targets radiation in Fast Neutron Nuclear Reactors with the sense that the targets are being placed inside special trap constructions with Zirconium Hydroxide of regulating rods of nuclear reactors. In those species fast neutrons are reacting with Hydro-gene and decrease their energy to thermal one keeping high density. This allows to increase the capture velocity of neutrons to times in comparison with quick neutrons and reduce the production time for radio nuclides to activity required.

The drawbacks of this method are: law quantity of targets which may be placed within the slowing element with Zirconium Hydroxide of working rod; change of neutrons density and energy upon reactor operation due to transition of regulating rod in nuclear reactor, which complicates the calculations for radio nuclides accumulation; necessity to achieve the maximal term of regulating rod placement in the nuclear reactor which may lead to significant decrease of radio nuclides production velocity due to their radioactive disintegration.

There is a known method for targets radiation by neutrons in Fast Neutron Nuclear Reactors with the sense that the targets are being placed into RAs containing special elements with materials resorbing and slowing the quick neutrons. The device is surrounded by fuel assemblies containing Uranium materials for production of nuclear fuel - Plutonium. To decrease the Uranium burn-out velocity and high radiation damage of fuel elements due to formation of neutrons thermal spectrum, resorbing elements at the periphery of RA are being used. This allows to decrease or completely exclude the interaction of thermal neutrons with fuel assemblies.

The advantages of this method are: formation of high neutron flow (over 1x10¹⁵cm⁻²c⁻¹) with low energy; presence of high quantity of cells in the side screen of Fast Neutron Nuclear Reactor for IDs placement; practical absence of RA influence on physical characteristics of nuclear reactor core; keeping of neutron flow with known energy required for correct calculations during all the time of targets being within the reactor. This allows to effectively perform the production of radio nuclides using the targets of low cross-selection of high energy neutron capture.

As a disadvantages of regarded method of radio nuclides production in side screen of Fast Neutron Nuclear Reactor the following may be noted: presence of resorbing elements in RA which leads to increase of price for the device, reduction of space for targets placements in RAs, decrease of neutron flow density, risks of radiation damages for fuel assemblies surrounding the RAs. Disadvantages of said are determined by design of RA and its placement between the fuel assemblies of side screen of the Fast Neutron Nuclear Reactor.

The closest analogue relevant to invention declared for the maximal quantity of significant indicators and taken as prototype, us the method described in RF Patent # 2076362 of 27.03.1997 and meaning that the radiated material is being placed in the RA within the neutron slower and then the RAs are placed in the side screen of Fast Neutron Nuclear Reactor. In these conditions the radiating assemblies are separated from fuel assemblies of reactor by steel assemblies,

Upon the work of Fast Neutron Nuclear Reactor the flow of fast neutrons from fuel assemblies goes through the steel assemblies in which the neutrons spectrum is being softened, and then the softened neutrons go into the neutrons slower of radiation assembly made of hydro-gene containing material in which the neutrons spectrum is being finally softened up to the thermal range of neutron energies. This leads to increase of possibility for resorption of slowed neutrons in the starting material of the target.

The slowed neutrons go through the radiated material and then again through the slower which is made as a plug of neutron slowing material. Upon this, the flow of fast neutrons in steel assemblies is practically not weakened, as the absorption cross-section for fast neutrons in steel is small and it is much less than the diffusion cross-section. The obligatory conditions for this method are: more than 50% of steel in the steel assembly, presence of slower level not less than 0.5 of the length of free path of neutrons.

The disadvantages of this method are:
1) Big quantity of steel in the steel assembly (over 50%) and, as a consequence, high weight of assembly and complication of works with steel assemblies;
2) Performance by steel assemblies of only one function for preliminary softening of neutrons energy spectrum;
3) The steel assemblies take significant useful volume in the reactor and produce high quantity of radioactive wastes as radio nuclides worked out in steel and requiring utilization;
4) Limitation of radio nuclides production nomenclature with different neutron absorption cross-section, as only one radiation assembly with given parameters for energy spectrums is being used for this;
5) Relatively small volume of radio nuclides produced, as the production is being done only in radiation assembly.

The goal of invention is the increase of productivity of production of wide nomenclature of radio nuclides (radioactive isotopes) in Fast Neutron Nuclear Reactors with different neutron adsorption cross-section in wide energetic range of neutrons with enlarged nomenclature for decrease of fast neutrons energy. Besides, the goals of invention are: enhancement of process efficiency, decrease of materials used for process, simplification of work with process elements, and assurance of possibility for production of additional radio nuclides keeping the safety of operation of Fast Neutron Nuclear Reactor

The goal of the this invention is being resolved with the help of method of radioactive isotopes production in the side screen of Fast Neutron Nuclear Reactor, including the placement of targets for radioactive isotopes production in the radiation assembly containing the neutron-slowing materials, and steel assemblies surrounding the radiation assembly. Inside the radiation assembly there are placed the plumbs or blocks of materials placed, slowing the fast neutrons up to energies required, which assures efficient capture of neutrons slowed to energies below 0.1 MeV by targets with absorption cross-section lower than 1 barn High energy neutrons not captured by targets of final assembly are getting into the steel assemblies where they are absorbed by targets with absorption cross-section less than 1 barn upon the neutron energy over 0.1 MeV.

The characteristics of the current invention are: production of radio isotopes is being done simultaneously in radiating and steel assemblies, the material of radiation assembly target has an absorption cross-section over 1 barn with neutrons energy less than 0,1 MeV; the target material of steel assemblies has an absorption cross-section less than 1 barn with neutrons energy over 0,1 MeV; required energy spectrum of neutrons in radiating device is formed by use of slowing materials on the basis of Hydro-gene, Carbonium, Borium-11 and others, as well as their form and geometric dimensions; the targets of steel assemblies are made of materials decreasing the neutrons flow and burn out in fuel assemblies with simultaneous production of radio isotopes; the contents of steel in assemblies separating the radiation assembly from the fuel assembly is less than 50%. Due to this the mass of steel assemblies is decreased, which as a first simplificates their exploitation and secondly reduces the use of steel for steel assemblies required for the process of radioactive isotope production. At the meantime the safety of operation of Fast Neutron Nuclear Reactor is assured by the fact that for decrease of thermal neutrons flow from radiation assembly which have destructive effect to fuel assemblies, it turned out sufficient to include the intermediate assembly not containing big mass of steel, as thermal neutrons are fully slowed by small quantity of steel and the targets placed within the steel assembly.

The steel assembly may be made tubular and/or filled with additional targets with high neutrons absorption cross-selection in high range of energy. In the second case, beside exclusion of thermal neutrons the additional increase of efficiency of radio nuclides production process is achieved, as the volume of reactor presumed before only for passive exclusion of thermal neutrons is now used for production of additional radioactive isotopes with the help of fast neutrons, with simultaneous keeping of thermal neutrons exclusion function.

The radiated material with absorption cross-section over 1 barn with neutrons energy less than 0.1 MeV in preferable embodiment is Cobalt-60 (Co-59). The radiated material with absorption cross-section less than 1 barn with neutrons energy over 0,1 MeV in possible invention implementation options represents any of target options for production of Sr-89, Cu-64, Cu-67, P-32, P-33,Sn-117m, Y-91, 1-131, Sm-145 under different nuclear reactions. As neutron slowing material, the Yttrium Hydrate (YtYx where x=1.8-2.0) and Zirconium hydrate (ZrHx where x=1.8-2.0) are being used. It is as well possible to use other neutrons slowing materials on the basis of Carbonium and Borium-11 (B-11) sustainable isotope.

The plumb of slowing material of the final assembly has preferable wall thickness of 10-20 mm. In preferable embodiment the plumb has got a stick inside made with use of neutrons slowing material with diameter of 16-22 mm. In this case the distance between the plumb inner surface and the surface of the stick is not less than 4 mm, and the slowed neutrons upon implementation of the method of current invention, after transition through the radiated material do additionally pass through the stick and radiated material with absorption cross-section over 1 barn with neutrons energy less than 0.1 MeV.

The goal of the this invention is also resolved by radioactive material produced in accordance with the method according to any of options described and the device devoted for usage in medical and industrial purpose, containing the said radioactive material.

The object of this invention is also resolved by Fast Neutron Nuclear Reactor in which the method is used according to any of options described.

The technical result of invention is the increase of productivity of production of wide nomenclature of radio nuclides (radioactive isotopes) in Fast Neutron Nuclear Reactors with different neutron adsorption cross-section in wide energetic range of neutrons with enlarged nomenclature for decrease and increase of fast neutrons energy. Other technical results of invention are: decrease of assemblies weight, enhancement of process efficiency, decrease of materials used for process, simplification of work with reactor elements participting in the process, and assurance of possibility for production of additional radio nuclides keeping the safety of operation of Fast Neutron Nuclear Reactor

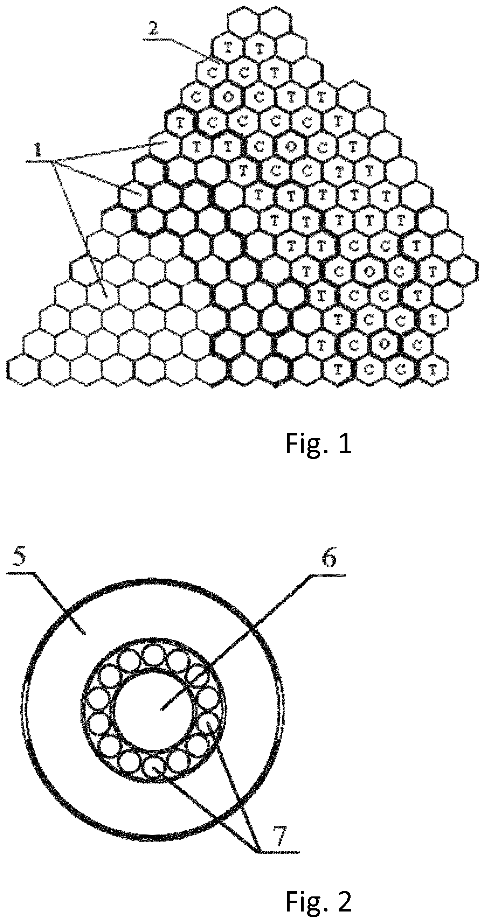

The method said is implemented in Fast Neutron Nuclear Reactor having the body in which core 1 and side screen 2 are located (see fig. 1). In the core the fuel assemblies devoted to creation of fast neutrons flow are being placed. In the side screen of reactor the fuel assemblies for Plutonium production and decrease of neutron flow and prevention of its output outside of reactor are being placed.

For implementation of the method in accordance with this invention, the radiating assemblies are being placed in the side screen 2 (at the fig. 1 marked as O). The radiating assemblies are placed among the fuel assemblies marked as T and separated by intermediate steel assemblies marked as C. Therefore, for implementation of invention the assemblies are placed as follows: the radiation assembly is placed in the side screen of reactor, surrounded by steel assemblies in their turn surrounded by fuel assemblies.

This configuration assures the gap between the fuel and radiating assemblies with the size not less than one of fuel and/or radiation assembly in direction correlating with gap direction length (i.e. in direction perpendicular to dilatational direction of assemblies). As it has been noted, the presence of this very gap assures the safety of reactor's operation, as thermal neutrons exited the radiation assembly, during the pass time of such gap are weakened or excluded to the stage at which the fuel assemblies demonstrates absent or negligibly low effects of burn through or unequal burnout of fuel.

As fuel assemblies are being placed not only in side screen 2, representing the multiplicity of assemblies placed at the periphery of core 1, but within the core 1 (at fig, 1 the fuel assemblies in core 1 are not marked as T), the this invention may also be implemented upon placement of radiating assemblies in the core. However, in accordance with the this invention the preferable embodiment is placement of radiating assemblies in the side screen as demonstrated at fig. 1, due to smaller flow of fast neutrons and the fact that in the side zone it is not required to assure the mode of fast neutrons flow formation - in core this could be complicated by necessity to consider the influence of radiation assembly and intermediate assemblies placed around the final assembly, which in total could take the substantively significant volume.

The final assembly is the assembly with plumb placed inside which is made of neutrons slowing material. As a neutron slowing material, different hydro-gene filled materials may be applied, In preferable embodiment the Zirconium hydride ZrHx where x=1.8-2.0 which at the most extent assures the neutrons slowing is applied.

As the radiation assembly is normally stretched and has the length several times exceeding its perpendicular dimensions, than along the assembly several slowing plumbs ore one whole plumb may be placed. Use of ganged plumb simplifies its production. The plumb is placed inside the relatively thin walled metal jacket.

Inside the plumb made with use of neutrons slowing material, the radiated material (target) interacting with thermal neutrons is being placed. For this the radiated material shall mostly have the absorption cross-section of over 1 barn with neutron energy less than 0.1 MeV. Such materials could be in particular: Cobalt, Carbonium, Tullium, Iridium. The target may be made as blocks, discs, powder or rods.

The steel assemblies are made tubular with use of less than 50% of steel from the total volume/weight of assembly. In process of investigation of the methods for radio nuclides production in Fast Neutron Nuclear Reactors it was experimentally calculated that for decrease of thermal neutrons flow from radiation assembly which have destructive effect to fuel assemblies, it turned out sufficient to include the intermediate assembly not containing big mass of steel, as thermal neutrons are fully slowed by small quantity of steel and the environment within or aside the steel assembly. Therefore, reduced-weight steel assemblies assure the safety of work of Fast Neutron Nuclear Reactor, it is in the meantime possible to reduce their weight which simplifies their exploitation and reduces the use of steel for production of steel assemblies required for the process of radioactive isotope production.

As the steel assembly is tubular, it may be filled with additional materials for production of radio nuclides. Due to the fact that the thermal neutrons flow in intermediate assembly is small and decreases upon the pass from the radiation assembly towards thermal assemblies, preferable is the use for radiation of fast neutrons flow which has sufficiently high intensity to assure efficient production of radioactive isotopes. For this in the tubular intermediate assembly the additional radiated material (target) with absorption cross-section less than 1 barn with neutrons energy over 0,1 MeV may be placed. That may be different materials for production, such as Sr-89, Cu-64, Cu-67, P-32, P-33, Sn-117m, Y-91, 1-131, Sm-145, with use of different nuclear reactions. Such targets may be placed within the steel assembly as blocks, discs, powder or rods.

Under such execution and assemblies placement in the Fast Neutron Nuclear Reactor the following method in accordance with this invention is implemented. After placement of target with absorption cross-section over 1 barn with neutrons energy less than 0.1 MeV in radiation assembly inside the plumb made with use of neutrons slowing material, the radiation assembly is being placed in the side screen of reactor core. The fast neutrons which are partially slowed up to required energies are passed through the neutrons slowing material of the plumb.

Then the slowed neutrons are being passed through the targets in radiation assembly. During this process there are nuclear reactions taken place, the result of which is radioactive isotope production. For instance, upon initial placement of Cobalt Co-59 in the radiation assembly, the Cobalt radio nuclide Co-60 is being worked out upon implementation of the method in accordance with the this invention.

Slowed neutrons passed through the radiated material (target) in radiation assembly, are being passed through the neutrons slowing material again. As a result the thermal neutrons are additionally slowed so that having exited from the radiation assembly and passed through assemblies containing less than 50% of steel and being tubular and/or filled with additional radiated material (targets) with absorption cross-section less than 1 barn with neutrons energy over 0.1 MeV they are being weakened to the stage that does not bring significant damage to fuel assemblies.

The fast neutrons which did not slow after passing of slowing plumb or slowed insignificantly, in fact do not interact with radiated material in radiation assembly inside the plumb, however they interact with additional radiated material if one is placed in tubular intermediate assemblies, as it does efficiently capture the neutrons with energy over 0,1 MeV. Due to that, simultaneously with production of radio nuclides from low energy neutrons, there is a radio nuclides production from fast neutrons radiation. It is required to note that due to placement of steel assemblies around the radiation assembly the flow of fast neutrons of one direction participates in radio nuclides production in not less than two intermediate assemblies located before and after the radiation assembly in the flow.

In preferable embodiment of radiation assembly demonstrated at fig. 2 the plumb 5 has got the walls of 10-20 mm, and has the stick 6 inside made with use of neutrons slowing material with diameter of 16-22 mm. The distance between the inner surface of plumb 5 and surface of stick 6 is not less than 4 mm. The lower figures of wall thickness and diameter assure effective decrease of fast neutrons energy without decrease of full neutrons flow. The upper figures of wall thickness and diameter are defined by necessity of placement of targets for radio nuclides production between the slowing elements. As the neutrons slowing materials for the stick the same material as one for the plumb is being used, for instance, Zirconium hydride ZrHx where x=1.8-2.0.

The distance between the inner surface of circular slowing element and the outer surface of central slowing element shall be not less than 4 mm, which is defined by change of sizes of device materials and elements due to radiation damages, and technological requirements for load and remote off-load of targets for radio nuclides production in radiation protected cameras. As demonstrated at fig. 2, demonstrating the sectional drawing of radiation assembly in preferable embodiment, around stick 6 placed along the axis of plumb 5, the targets 7 are placed, for instance as plumbs, discs, balls or rods with absorption cross-section less than 1000 barn with neutrons energy less than 1 keV.

In preferable implementation option of the invention the method has additional steps. In particular, the slowed neutrons after passing through the radiated material are additionally passed through the stick, in result of what they are additionally slowed, and then again through the radiated material with absorption cross-section over 1 barn with neutrons energy less than 0,1 MeV. It is required to note that the part of fast neutrons passing through the stick are being slowed enhancing the velocity of nuclear reactions at the target material, as a result of what the material radiation efficiency is enhanced.

Relatively, the method in particular and preferred option may look as follows The radiation assembly, inside of which in the plumb made with use of neutron slowing material the radiated material (target) is placed, is placed in the side screen of Fast Neutron Nuclear Reactor. The fast neutrons are passed through the neutrons slowing material and then through the radiated material of the radiation assembly. After this the slowed neutrons are finally passed through the stick and again through radiated material in radiation assembly, and then the neutrons exited the radiated material are passed through neutrons slowing material.

As noted above, the key advantage of this preferred option of method implementation is the fact that the neutrons flow is slowed to more extent in comparison with the option where the slowing stick in the plumb in radiation assembly is absent. Due to this the safety of reactor plant is additionally increased. Then the neutrons exited the radiation assembly are passed through the steel assemblies containing less than 50% of steel and being tubular and/or filled with additional radiated material with absorption cross-section less than 1 barn with neutrons energy over 0,1 MeV.

In result of the method implementation under this invention it is possible to get radioactive materials which may be used in devices devoted for use in medical and other purposes. For instance, upon placement of Cobalt Co-59 as a sample in radiation assembly it is possible to work out Cobalt Co-60 with massic activity of 300 Ki/g which several times exceeds the analogues, Achievement of this result is possible due to fact that the mass of slowing material in radiating device is increased and the neutrons flow is not weakened by steel assembly before income to radiation assembly, as the content of steel is less than 50%.

In enlarged description option of the present method it may include the following steps. Production of targets, their placement in radiation assembly of special construction without neutron capturing materials and steel assemblies. Placement of radiation assembly into the side screen of Fast Neutron Nuclear Reactor Placement of steel assemblies with targets around the radiation assembly. Radiation of assemblies up to required targets activity. Extraction of assemblies from the nuclear reactor, transportation of device to radiation protected cameras, disassembly of assemblies with targets extraction and preparation of radiation sources with given characteristics. Extraction and change of assemblies to new ones may be done not simultaneously depending on nomenclature of radio isotopes worked out.

The new valuable signs in comparison with prototype are simultaneous radio isotopes production in radiating device with slowing materials and steel assemblies with low content (less than 50%) of steel construction materials, use of targets with wide neutrons absorption cross-selection (0.01-1000 barn) of different energy (with shares of eV up to 5 MeV) which leads to increase of productivity, volume and nomenclature of radio isotopes worked out. Beside this, instead of extracted construction steel elements additional targets for production of radioactive isotopes are being used, having high absorption cross-selections for capture of high energy neutrons, and in radiation assembly the targets with materials with high absorption cross-selectin for neutrons with low energy spectrum are being used. This allows to make a conclusion that declared solution possesses a novelty.

In technical (patent) literature the methods are described which include the operations for use of slowing elements in Fast Neutron Nuclear Reactors, steel assemblies allowing to decrease the neutrons energy and increase the velocity of neutrons capture by targets for production of radio nuclides with required activity. In the present case the new technical solutions are being proposed for steel assemblies construction, placement of additional targets instead of steel elements extracted, conditions of their placement in the nuclear reactor with extraction and change of steel and radiating assemblies depending on the change of nomenclature of radio nuclides worked out. This allows to make a conclusion that declared solution possesses an inventional level.

## Claims

1. The method production of radioactive isotopes in Fast Neutron Nuclear Reactor, including
placing of radio nuclides production target in the radiation assembly containing neutrons slowing materials.
placing of radiation assembly into the side screen of Fast Neutron Nuclear Reactor among assemblies not containing nuclear fuel.
passing of fast neutrons through neutrons slowing materials in radiation assembly.
passing of slowed neutrons through targets in radiation assembly
**characterised in that**
producing of radio nuclides is being done simultaneously in radiating and surrounding steel assemblies
the targets for production of radio nuclides in radiation assembly have the neutrons absorption cross-section over 1 barn with neutrons energy less than 0.1 MeV;
the targets for production of radio nuclides in assemblies surrounding the radiation assembly have the neutrons absorption cross-section less than 1 barn with neutrons energy over 0.1 MeV, and the content of steel in assembly does not exceed 50%

2. The method according to claim 1, **characterised in that** as radiation device target the Co-59 in the form of powder or plumbs is being used.

3. The method according to claim 1, **characterised in that** neutrons slowing materials are made as plumbs with wall thickness of 10-20 mm, and inside the plumb the stick is being placed made with use of neutrons slowing material with diameter of 16-22 mm, the distance between the inner surface of the plumb and the surface of the stick is not less than 4 mm, wherein the slowed neutrons after passing through the radiated material are additionally passed through the stick and radiated material with absorption cross-section less than 1000 barn with neutrons energy less than 1000 eV.

4. The method according to claim 1, **characterised in that** as neutron slowing material the Zirconium hydride ZrHx where x=1.8-2.0, Graphite (C), compositions on its bases or Borium carbide ¹¹B4C where the enrichment for Borium-11 isotope is over 97% are being used

5. The method according to claim 1, **characterised in that** as targets of assemblies surrounding the final assembly, use Sr-89, Cu-64, Cu-67, P-32, P-33, Sn-117m, Y-91, 1-131, Sm-145.

6. The radioactive material produced in accordance with the method according to any of points 1-5.

7. The device devoted for use in medical and common industrial purposes and containing radioactive materials worked out in accordance with the method according to any of points 1-5.

8. The Fast Neutron Nuclear Reactor in which the method is implemented according to any of points 1-5.
